Europäisches Patentamt

European Patent Office

Office européen des brevets

(19)

(11) Numéro de publication: **0 010 017**
**B1**

(12) **FASCICULE DE BREVET EUROPEEN**

(45) Date de publication du fascicule du brevet: **19.10.83**

(51) Int. Cl.³: **G 11 B 7/24** //G11B7/26

(21) Numéro de dépôt: **79400643.7**

(22) Date de dépôt: **13.09.79**

(54) **Disque optique protégé.**

(30) Priorité: **29.09.78 FR 7827920**

(43) Date de publication de la demande:
**16.04.80 Bulletin 80/8**

(45) Mention de la délivrance du brevet:
**19.10.83 Bulletin 83/42**

(84) Etats contractants désignés:
**DE GB IT NL SE**

(56) Documents cités:
**DE - A - 2 653 831**
**FR - A - 2 238 211**
**FR - A - 2 355 337**
**NL - A - 7 900 205**

**IBM TECHNICAL DISCLOSURE BULLETIN vol. 17, no. 12, mai 1975, Armonk, New York, US**
**A. COX et al.: "Container for recording disks" page 3745**

**Hahn, Muhuke, Werkstoffkunde für die Elektrotechnik und Elektronik. Berlin 1973. pp. 427—428**

(73) Titulaire: **THOMSON-CSF**
**173, Boulevard Haussmann**
**F-75379 Paris Cedex 08 (FR)**

(72) Inventeur: **Lehureau, Jean-Claude**
**"THOMSON-CSF" - SCPI 173, bld Haussmann**
**F-75360 Paris Cedex 08 (FR)**
Inventeur: **Magna, Henriette**
**"THOMSON-CSF" - SCPI 173, bld Haussmann**
**F-75360 Paris Cedex 08 (FR)**
Inventeur: **Thirouard, Michel**
**"THOMSON-CSF" - SCPI 173, bld Haussmann**
**F-75360 Paris Cedex 08 (FR)**

(74) Mandataire: **Desperrier, Jean-Louis et al,**
**THOMSON-CSF SCPI 173, Bld Haussmann**
**F-75379 Paris Cedex 08 (FR)**

Courier Press, Leamington Spa, England.

Disque optique protégé

La présente invention concerne un disque optique protégé destiné à l'enregistrement d'informations: signaux vidéo-fréquences ou signaux numériques.

On sait que pour obtenir une grande densité d'information sur un support peu encombrant, il est avantageux d'utiliser un disque optique comportant au moins une couche dont les caractéristiques physiques varient dès qu'elle est exposée à un rayonnement, dans laquelle l'information est enregistrée au moyen d'un faisceau lumineux focalisé sous la forme de microéléments diffractants que l'on peut détecter par la suite à l'aide d'un autre faisceau lumineux focalisé en vue de la lecture de l'information. Pour permettre des manipulations aisées et fréquentes par un utilisateur, le disque, pré-inscrit ou vierge, qui sera vendu dans le commerce, doit comporter des protections permettant d'éviter toute influence des poussières, traces de doigts, etc ... sur le disque et également toute altération de la couche sensible aux rayonnements.

La fabrication de disques pré-inscrits est basée sur le pressage d'un support transparent à partir d'une matrice portant l'information à reproduire sur un grand nombre de disques. Les opérations de fabrication s'effectuent en atmosphère dépoussiérée, avec beaucoup de précautions afin de ne pas déformer le support optique. Les disques obtenus portent une information lisible optiquement mais ils ne peuvent pas être enregistrés par l'utilisateur lui-même.

La réalisation de disques inscriptibles par l'usager est plus complexe car il faut que les protections ajoutées à la couche servant à enregistrer l'information ne perturbent pas la traversée d'un faisceau lumineux focalisé modulé par l'information. Il faut d'autre part que le mode d'enregistrement ne nécessite pas de développement. Des disques inscriptibles ont été décrits comprenant une couche subissante une modification permanente sous l'action d'un rayonnement d'inscription, placée entre deux plaques, dont l'une est transparente, la couche étant déposée sur l'une des plaques, les deux plaques étant séparées par des cales, afin de ménager un espace libre devant la couche pour permettre le dégagement des produits de décomposition, par exemple des vapeurs métalliques lorsque la couche est une couche métallique volatilisable. La nécessité de fabriquer des cales d'épaisseur rigoureusement constante pour ne pas nuire à la planéité des plaques, des plaques suffisamment épaisses et rigides pour assurer une bonne protection et d'assembler le tout conduit à des coûts de production élevés. Ces disques sont décrits dans une demande de brevet français n° 76 18 602 déposée le 18 juin 1976 au nom de "THOMSON—BRANDT" et publiée sous le numéro 2 355 337.

L'invention vise un disque optique protégé ayant un trou central destiné à sa mise en rotation et comportant une couche d'un matériau d'enregistrement placée entre deux supports rigides de façon à être isolée de l'extérieur; lesdits supports délimitant une chambre annulaire refermant une plage d'inscription annulaire plane de ladite couche accessible par un faisceau de rayonnement focalisable sur celle-ci; l'un desdits supports étant une plaque transparente ayant une face plane portant ladite couche, caractérisé en ce que l'autre support est constitué par une feuille préformée en capot de façon à reposer sur ladite couche par des surfaces de contact épousant la forme d'anneaux coaxiaux et à coiffer ladite chambre annulaire par une zone déprimée vis-à-vis desdites surfaces de contact, ladite feuille étant percée d'un trou central et collée à ladite couche afin de clore ladite chambre annulaire, la face interne de ladite feuille étant recouverte d'un dépôt antioxydant constitué par un métal plus électropositif que le métal dont est formé ladite couche.

L'invention permet d'obtenir un disque facile et peu coûteux à réaliser. Le disque selon l'invention n'utilise pas de cales pour ménager un espace devant la couche d'enregistrement. Cette couche étant déposée sur une plaque transparente de type courant, d'un mm d'épaisseur environ, on fixe sur l'ensemble plaque-couche un capot de protection dont la forme même assure le contact aux bords du disque et autour du trou central du disque, tandis qu'un espace clos est ménagé entre ces deux contacts circulaires. A cet effet, le capot peut être réalisé à partir d'une feuille métallique, ce qui représente un faible coût en matière première, par poinçonnage et formage à l'aide d'un outil simple. Le formage peut s'effectuer sans précautions particulières puisque aucune qualité optique n'est requise sur le capot. Par contre, la plaque transparente recouverte de la couche d'enregistrement ne subit, elle, aucun formage. L'ensemble ne risque donct pas de subir des altérations dues à des manipulations. Selon l'invention ou pout par ailleurs utiliser une couche d'enregistrement constituée par une couche thermodégradable fortement plastifiée et une couche métallique extrêmement mince. On obtient ainsi une très bonne sensibilité avec une source laser de puissance moyenne. La protection à distance à l'aide d'un moyen antioxydant d'un élément de structure d'un tube à vide est connue du document "Werkstoffkunde für die Electrotechnik und Elektronik" Berlin 1973, pp 427—428. L'utilisation d'un capot en métal embouti permet d'autres améliorations par rapport aux disques de type connu. Il est possible d'obtenir une protection électrochimique de la couche métallique d'ablation faisant partie de la couche d'enregistrement.

L'invention sera mieux comprise à l'aide de la description qui suit en référence aux figures annexées.

La figure 1 représente un disque selon l'invention.

La figure 2 montre la réalisation du capot à partir d'une feuille métallique.

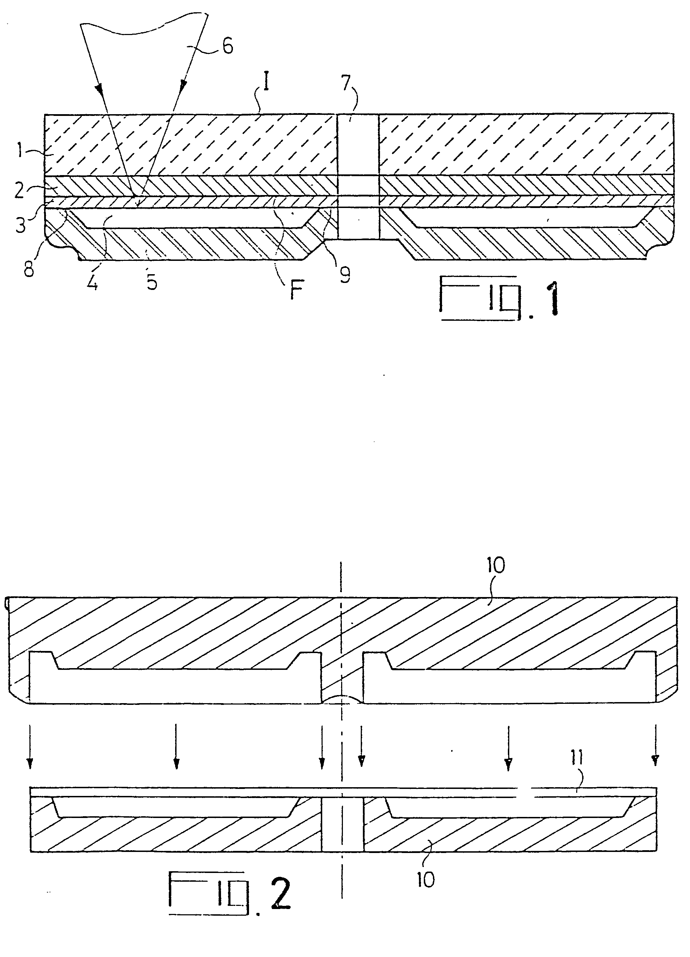

La figure 1 représente une vue en coupe radiale d'un disque optique protégé selon l'invention. Tous les éléments du disque sont coaxiaux et percés d'un trou central 7 destiné au passage d'un axe de rotation faisant partie d'un enregistreur ou d'un lecteur optiques. Il comprend une plaque transparente 1, de préférence en matière plastique telle que le chlorure de polyvinyle, le polyméthyl métacrylate, ou le polycarbonate. La qualité de surface de cette plaque doit être compatible avec le bon fonctionnement des asservissements des enregistreurs et des lecteurs. De telles exigences sont peu rigoureuses et obtenues avec des plaques de type courant. En effet, la plaque 1 a une épaisseur de l'ordre de 1 mm et elle est destinée à recevoir un faisceau lumineux 6 (d'enregistrement ou de lecture) dont le plan de focalisation est situé en dehors de la plaque et dont le diamètre, lors de son passage à travers la plaque, est également de l'ordre du mm. Dès lors, les poussières, rayures et salissures n'entraîneront pas de variations sensibles dans la répartition d'énergie de la tache d'enregistrement.

La face de la plaque 1 opposée à la face d'incidence I du faisceau 6 est destinée à être recouverte d'une couche thermosensible. Ce disque étant plus particulièrement destiné à être inscrit par l'utilisateur et lisible directement, c'est-à-dire sans développement préalable, on utilisera de préférence une couche thermosensible telle que celle décrite dans la demande de brevet français déposée par la demanderesse n° 76 31 867 et publiée sous le numéro 2 368 779, c'est-à-dire constituée d'une première couche 2 thermodégradable à basse température (de l'ordre de 100—150°C) déposée par trempage ou centrifugation sur la plaque transparente et d'une deuxième couche 3, métallique, déposée sur la couche 2 par évaporation sous vide ou dépôt chimique. La couche 2 a une épaisseur relativement faible, de l'ordre de quelques $\mu m$. Sa face F opposée à la face de contact avec la plaque 1 doit être parfaitement rectifiée car elle constitue le plan de focalisation du faisceau 6. La couche métallique 3 déposée sur la face F a une épaisseur très faible (de l'ordre du centième de $\mu m$). Une telle couche est très fortement absorbante à la longueur d'onde du rayonnement d'inscription, ce rayonnement provenant d'une source laser susceptible de fournir dans le plan focal d'un objectif réglé de façon à être confondu avec le plan de la couche 3, une tache de dimension suffisamment faible pour l'inscription de micro-éléments. Avec une épaisseur de l'ordre du centième de $\mu m$, une telle couche est capable d'absorber plus de 60% du rayonnement et l'énergie thermique due à la tache lumineuse reste concentrée au voisinage de cette tache. La couche thermodégradable 2 ayant une épaisseur nettement inférieure à la profondeur de pénétration du rayonnement d'inscription dans le matériau qui la constitue, la majeure partie du rayonnement est transmise à la couche métallique 3 qui s'échauffe localement et rapidement jusqu'à une température de l'ordre de 100°C à 200°C. Cet échauffement est diffusé vers la couche thermodégradable 2 qui est ainsi portée à sa température de dégradation et est localement détruite par les zones situées en contact avec les zones métalliques chauffées. Cette dégradation met en jeu des phénomènes complexes mécaniques et chimiques qui provoquent une attaque de la couche métallique dans la zone qui a diffusé la chaleur mais pas dans les zones voisines. On obtient ainsi des microéléments diffractants lisibles optiquement par réflexion lorsque le faisceau 6 provient d'un laser de faible puissance. Lors de l'enregistrement, des produits de décomposition doivent pouvoir s'échapper de la couche thermosensible. Il est donc nécessairre de prévoir un espace derrière la couche métallique 3 tout en assurant une protection de cette couche et la rigidité de l'ensemble du disque. A cet effet, le disque comprend en outre un capot de protection 5 qui forme la face du disque opposée à la plaque transparente 1. Selon l'invention, ce capot est réalisé à partir d'une feuille dont les propriétés mécaniques assurent la rigidité souhaitée, faite dans un matériau organique ou métallique, de l'aluminium par exemple, de façon à assurer un faible coût de matière première et une grande facilité d'usinage. La feuille d'origine est emboutie, de façon à lui donner la forme représentée sur la figure 1 et qui fournit l'espace clos recherché 4 et des surfaces de contact en forme d'anneaux coaxiaux avec la couche métallique 3 au bord du disque (surface 8) et au voisinage du trou central 7 du disque (surface 9). Un tel capot est facile à réaliser, simple à monter sur le reste du disque et donne une bonne rigidité et une planéité à l'ensemble.

Pour réaliser le capot 5 à partir d'une feuille métallique, on peut utiliser un outil de poinçonnage et formage tel que celui représenté en coupe sur la figure 2. On part d'une feuille métallique 11 rectifiée dont l'épaisseur est de l'ordre de 500 $\mu m$ et on réalise simultanément, grâce à un ensemble presse-matrice 10, le perçage du trou central et l'enfoncement de la feuille entre les surfaces 8 et 9 de façon à former la cavité. Cette opération de pressage peut être effectuée sans précautions particulières et aucune opération mécanique n'est à effectuer sur le reste du disque, qui, lui, tant qu'il n'est pas protégé par le capot, doit être maintenu en atmosphère propre, à l'abri des poussières et des déformations. Ainsi, la seule opération à effectuer avec précautions est le collage du capot sur la couche métallique 3. Mais cette opération est aisée à réaliser.

Le type de réalisation du capot de métal embouti ainsi décrit offre un avantage supplémentaire qui est celui de la protection chimique de la couche métallique 3. En effet, comme le gaz contenu dans la cavité 4 est de l'air, il peut se produire à la longue une oxydation, ce qui, bien sûr, détériore les caractéristiques thermiques et chimiques de la couche 3. L'invention prévoit différentes possibilités de protection, notamment le dépôt sur la face intérieure du capot 5 d'un métal plus électropositif que le métal dont est formé la couche 3, par exemple du zinc, du manganèse. Ce dépôt peut être effectué par évaporation ou par un procédé électrochimique. Une autre possibilité de protection chimique consiste à déposer sur la face intérieure du capot 5 une couche organique contenant en suspension des particules métalliques ou des oxydes métalliques insaturés, par exemple une peinture au minium.

## Revendications

1. Disque optique protégé ayant un trou central destiné à sa mise en rotation et comportant une couche (3) d'un matériau d'enregistrement placée entre deux supports rigides (1, 5) de façon à être isolée de l'extérieur; lesdits supports délimitant une chambre annulaire (4) refermant une plage d'inscription annulaire plane de ladite couche (3) accessible par un faisceau de rayonnement (6) focalisable sur celle-ci; l'un desdits supports (1) étant une plaque transparente ayant une face plane (F) portant ladite couche (3), caractérisé en ce que l'autre support (S) est constitué par une feuille préformée en capot de façon à reposer sur ladite couche (3) par des surfaces de contact (8, 9) épousant la forme d'anneaux coaxiaux et à coiffer ladite chambre annulaire (4) par une zone déprimée vis-à-vis desdites surfaces de contact (8, 9) ladite feuille étant percée d'un trou central (7) et collée à ladite couche (3) afin de clore ladite chambre annulaire (4), la face interne de ladite feuille étant recouverte d'un dépôt antioxydant constitué par un métal plus électropositif que le métal dont est formé ladite couche (3).

2. Disque selon la revendication 1, caractérisé en ce que la plaque transparente (1) a une épaisseur telle que la répartition d'énergie dans la tache formée par le point de focalisation du faisceau n'est pas modifiée par des défauts dans l'état de surface externe (I) de la plaque (1).

3. Disque selon l'une des revendications 1 à 2, caractérisé en ce que la couche (3) de matériau d'enregistrement est une couche thermosensible constitué d'une première couche thermodégradable (2) déposée sur la plaque transparente (1) et d'une deuxième couche métallique (3) déposée sur la première couche (2).

4. Disque selon l'une des revendications 1 à 3, caractérisé en ce que ladite feuille (5) est métallique et préformée par emboutissage.

5. Disque selon la revendication 4, caractérisé en ce que ladite feuille (5) est en aluminium.

## Patentansprüche

1. Geschützte optische Scheibe mit einem zentralen Antriebsloch, wobei die Scheibe eine Schicht (3) eines informationsspeichernden Materials zwischen zwei starren Trägern (1, 5) aufweist und durch diese gegen die Außenwelt isoliert ist und wobei die beiden Träger eine ringförmige Kammer (4) begrenzen, die einen ebenen, ringförmigen, für einen auf die Schicht (3) fokussierbaren Aufzeichnungsstrahl (6) erreichbaren Aufzeichnungsbereich einschließt, wobei einer der Träger (1) eine transparente Platte mit einer ebenen, die Schicht (3) tragenden Seite (F) ist, dadurch gekennzeichnet, daß der andere Träger (5) aus einer als Deckel vorgeformten Folie besteht, die auf der Schicht (3) über ringförmigen koaxiale Kontaktflächen (8, 9) aufliegt und die ringförmige Kammer mittels einer bezüglich der Kontaktflächen (8, 9) erhöhten Zone umschließt, wobei die Folie ein zentrales Loch (7) aufweist und auf die Schicht (3) aufgeklebt ist, um die ringförmige Kammer (4) zu verschließen, und wobei die Innenfläche der Folie mit einer oxidationshemmenden Schicht bedeckt ist, die aus einem elektropositiveren Metall besteht als das Metall, aus dem die Schicht (3) besteht.

2. Scheibe nach Anspruch 1, dadurch gekennzeichnet, daß die transparente Platte (1) eine solche Dicke aufweist, daß die Energieverteilung in dem durch den Brennpunkt des Strahls gebildeten Fleck nicht durch Fehler im Zustand der äußeren Oberfläche (I) der Platte verändert wird.

3. Scheibe nach einem der Ansprüche 1 bis 2, dadurch gekennzeichnet, daß die Schicht (3) aus informationsspeicherndem Material eine wärmeempfindliche Schicht ist, die aus einer sich bei Wärme zersetzenden und auf die transparente Platte (1) aufgebrachten ersten Schicht (2) und aus einer metallischen zweiten Schicht (3) besteht, die auf die erste Schicht (2) aufgebracht ist.

4. Scheibe nach einem der Ansprüche 1 bis 3, dadurch gekennzeichnet, daß die Folie (5) aus Metall besteht und durch Prägen vorher geformt wurde.

5. Scheibe nach Anspruch 4, dadurch gekennzeichnet, daß die Folie (5) aus Aluminium ist.

## Claims

1. A protected optical disk having a central hole for a turntable pin and comprising a layer of a storage material interposed between two rigid supports (1, 5) in such a manner that it is isolated from the outside, these supports delimiting an annular chamber (4) which encloses an annular and even inscription area in that layer (3) to which area a focalisable radiation beam (6) can be applied, one of these supports (1) being constituted by a transparent plate one even face (F) of which bears said layer (3), characterized in that the other support (5) is constituted by a sheet which is cup-shaped in such a manner that it rests via coaxial annular contact surfaces (8, 9) on said layer (3) and that it covers said annular chamber (4) by a depressed zone with respect to said contact surfaces (8, 9), said sheet having a central hole (7) and being glued to said layer (3) such as to close said annular chamber (4), the inner face of said sheet being covered by an antioxydizing layer constituted by a metal which is electropositive to a higher degree than the metal constituting said layer (3).

2. A disk according to claim 1, characterized in that the thickness of the transparent plate (1) is chosen in such a manner that the energy distribution in the spot which is built up by the focus point of the beam is not modified by faults in the state of the outer surface (I) of the plate (1).

3. A disk according to one of the claims 1 to 2, characterized in that the layer (3) of storage material is a thermosensible layer constituted by a first layer (2) which can be damaged by heat and which is coated onto the transparent plate, and by a second layer (3) which is metallic and is coated onto the first layer (2).

4. A disk according to one of the claims 1 to 3, characterized in that the said sheet (5) is a metal sheet and is previously shaped by a press stamp.

5. A disk according to claim 4, characterized in that the said sheet (5) is made of aluminium.

Fig.1

Fig.2